# EUROPEAN PATENT SPECIFICATION

(11) **EP 1 506 648 B1**
(45) Date of publication and mention of the grant of the patent: **30.06.2010**
(21) Application number: 03727531.0
(22) Date of filing: 19.05.2003
(51) Int. Cl.: H04L 12/58, H04W 84/00

(54) **TRANSMISSION OF MESSAGES CONTAINING IMAGE INFORMATION**
ÜBERTRAGUNG VON NACHRICHTEN, DIE BILDINFORMATIONEN ENTHALTEN
TRANSMISSION DE MESSAGES CONTENANT DES INFORMATIONS D'IMAGE

(30) Priority: 17.05.2002 FI 20020932
(43) Date of publication of application: 16.02.2005
(73) Proprietor: Jartti, Tero, 00180 Helsinki (FI); Hietanen, Jari, 00610 Helsinki (FI)
(72) Inventor: Jartti, Tero, 00180 Helsinki (FI); Hietanen, Jari, 00610 Helsinki (FI)
(74) Representative: Järveläinen, Pertti Tauno Juhani
(86) International application number: PCT/FI2003/000384
(87) International publication number: WO 2003/098889

(56) References cited:
- WO-A1-02/11398
- WO-A2-02/49319
- WO-A2-99/66746
- DATABASE WPI Week 200265, Derwent Publications Ltd., London, GB; Class H04, AN 2002-605508, XP002904913 & KR 2002 020 390 A (LG TELECOM LTD) 15 March 2002

## Description

The present invention relates to a method and system for transmitting a message containing image information to different terminals.

Text messages can be transmitted e.g. in a GSM network by the agency of a short message service, which is capable of sending text messages of a certain length, containing e.g. a maximum of 160 characters, from one GSM telephone to another. The text message service is controlled by a Short Message Service Center (SMSC), which functions as a store-and-forward type center. The text message may contain simple images, but their information content is relatively limited.

WO-A-99 66746 discloses a method and a wireless telecommunications, system, a message service centre and a mobile station implementing the method for transmitting messages between a mobile station and a second party. The method of the invention comprises the following steps for delivering messages irrespective of the presentation thereof: delivering messages through the same message service centre irrespective of the content type, and employing the same protocol between the terminal and the message service centre for all messages. The content type indicates the presentation of the message contents which may include text, speech, images, video images or various combinations thereof.

WO0133781 discloses a method for implementing a multimedia messaging service between a wireless terminal that communicates with a communication network over a radio path and a server. The method comprising the steps of receiving and storing a multimedia message addressed to the wireless terminal at the server, the multimedia message comprising at least one multimedia component, and storing information on at least one property of the wireless terminal in the server. The method further comprises determining if there is any component of the multimedia message, which the wireless terminal can handle according to the stored information on at least one property of the wireless terminal. If there exists one or more such component(s), they are selected for transmission and transmitted to the wireless terminal. WO0133781 further discloses that data requested by the receiving terminal is transmitted to the terminal in a format the terminal can handle. This implies, for example, that the server should either store data to be downloaded in a number of different formats or that it is capable of translating data from one format that is not suitable for a given communication terminal into another format that is suitable for the terminal in question. This approach may work in a situation where certain content is provided for download from a given server. The data available for download can then be stored in the server, for example in a limited number of commonly used data formats, or translation functionality can be provided to convert the stored data into any one of a number of commonly used alternative formats.

The object of the present invention is to achieve a service based on pictorial messages that will make it possible to send messages containing text and image information (e.g. short movie or music video) with good quality to terminals of different levels. The terminal may be e.g. a mobile telephone, a palmtop microcomputer (PDA) or digital television. The service takes into account the technical properties of the terminal and selects an implementation / version of implementation of the image information message that is compatible with the properties of the terminal.

### WHAT PROBLEMS OF PRIOR ART ARE SOLVED BY THE INVENTION?

### PROBLEM 1: TECHNICAL QUALITY IN THE RECEIVER'S TERMINAL

When material containing image information is sent to a receiver without knowing what kind of terminal the receiver is using, the sender can not be sure that the message will reach the destination. The receiver's terminal does not necessarily support the format in which the message is sent. Even if the message does reach the receiver, its technical quality may be so poor that the receiver will lose the essential content of the message. In the service according to the invention, this problem is eliminated as the image information to be transmitted has been reproduced beforehand in several different versions by considering the technical properties of different receiving terminals regarding reception of information transmitted. Thus, the receiver will receive a version that has been implemented expressly for the properties of his/her terminal. The service of the invention ensures that a receiver whose telephone supports at least MMS properties will be able to view a received message containing image information immediately as a good-quality message and to react to it.

### PROBLEM 2: DIFFICULTY OF USE OF THE SERVICE

When the user wants to find or especially to forward a movie serving as a personal message, finding a movie among numerous alternatives that is appropriate for the purpose and previously unknown is a difficult and time-consuming task because, in order to understand the content of the film, it is necessary to view the entire film.

The invention makes the service user's selection process considerably easier and faster. Immediately upon choosing a desired genre, the service user is able to view electric posters describing different movies. The posters correspond to the respective movies in spirit and appearance, and if necessary they also contain a description (e.g. an on-liner) of the content of the movie. When a poster attracts the user's attention, he can quickly check the style, implementation, content and plot of the movie by seeing a cartoon-strip style version of the movie.

Using the service of the invention, it is also possible to attach to the image information a text portion that renders the combination a specific personal message. If the user has already conceived a text portion, he can type it himself, otherwise he can easily find a text to be attached to the image information that will be appropriate to the movie selected. The invention offers the user an easy and fast way of finding and combining suitable text to image information and sending the combination forward without having to search the Internet or any other source of information to find e.g. aphorisms of a philosopher.

### PROBLEM 3: INCOMPATIBILITY OF PICTORIAL NARRATION AND AUDIO WORLD OF A MOVIE WITH THE DISPLAY AND SOUND REPRODUCTION OF DIFFERENT TERMINALS

When a movie is produced as a single version only and it is scaled to fit the receiver's terminal, there appears the problem that the pictorial narration or audio world of the movie does not function in the best possible way in all terminals. Pictorial narration designed for larger displays is seldom suitable for a small display, and much less would the audio world of a DVD-level film be functional in the modest speakers of a mobile telephone, PDA or portable computer and vice versa. A movie implemented for a small display and an audio world taking its more modest sound reproduction into account looks and sounds peculiar in a terminal that is capable of reproducing a DVD-level movie on a larger screen, with stereo or even surround sound. Even if the spectator uses earphones, the conflict between a massive sound world and a small image is disturbing. In order to be functional, the pictorial narration and audio world of a movie have to match each other.

The size of the display defines the pictorial narration of the movie to a considerable degree. Things or elements that the spectator can see without difficulty on a larger display, e.g. a 20" digital television screen or a 17" home computer display, easily go unnoticed on the small display of a mobile telephone. In an implementation designed for a small display, the visibility of elements essential to the plot of the movie, such as e.g. props or actors' reactions, has to be ensured by pointing out these elements with denser images. This has an effect on the pictorial narration of the entire movie version and especially its rhythm. Frequent use of close shots on a larger display easily produces an awkward and aggressive effect and soon loses its cinematic effect, whereas it supports the pictorial narration esthetics and viewability required by a small display. In terminals of a larger capacity which also have a larger display, more elements supporting the atmosphere required by the content of the scene can be included in the same image. This can be accomplished via more abundant stage effects or e.g. via changing illumination a nd camera movement. An implementation designed for a smaller display and a lower terminal performance has to be composed of denser images, brisk camera movements should be avoided and pictorial narration should rely more on editing. Image cropping should be particularly clear and images should be more graphical.

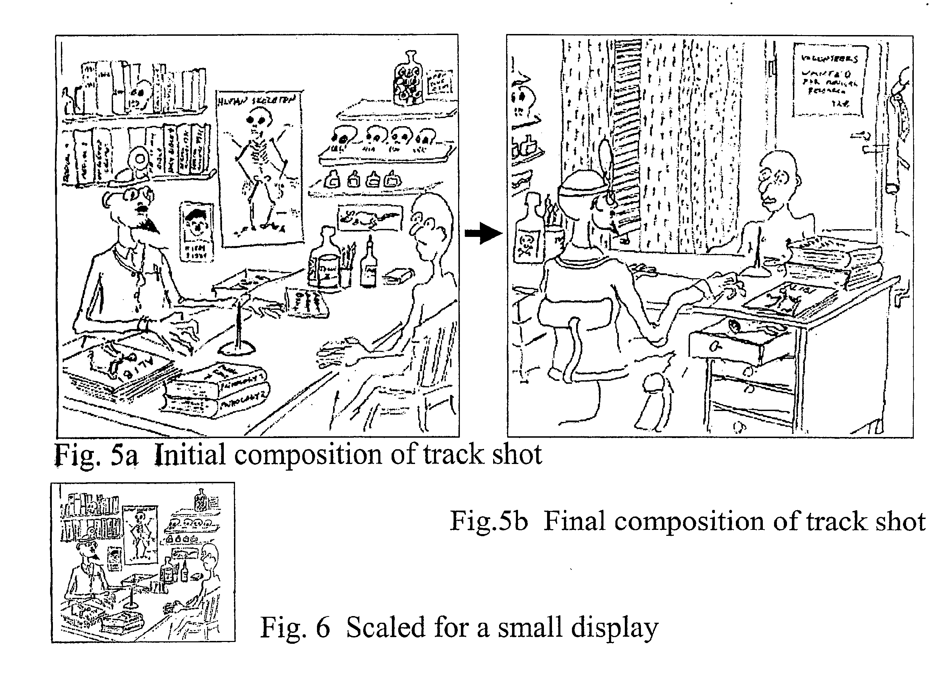

An example (see Fig. 5a, 5b, 6 and 7a - 7e) visualizes the importance of display size for pictorial narration. In an imagined beginning of an episode in an implementation intended for a larger display, inexorable, slow dollying is used as a means of producing a cinematic effect to intensify suspense (Fig. 5a and 5b are the initial and final compositions of the same track shot). The future murder weapon, a prong-like letter holder, remains in a central position in the image between the actors and is additionally pointed out by the actor's look at the end of the track shot.

This manner of pictorial narration is justified in the case of a large display and terminals supporting a high communication speed. Such an implementation does not work in the desired manner when scaled directly for a small display. In addition, the possible lower bandwidth would be insufficient for a scene containing plenty of changing information (cf. camera movement) to be directly reproduced (streamed) into the terminal.

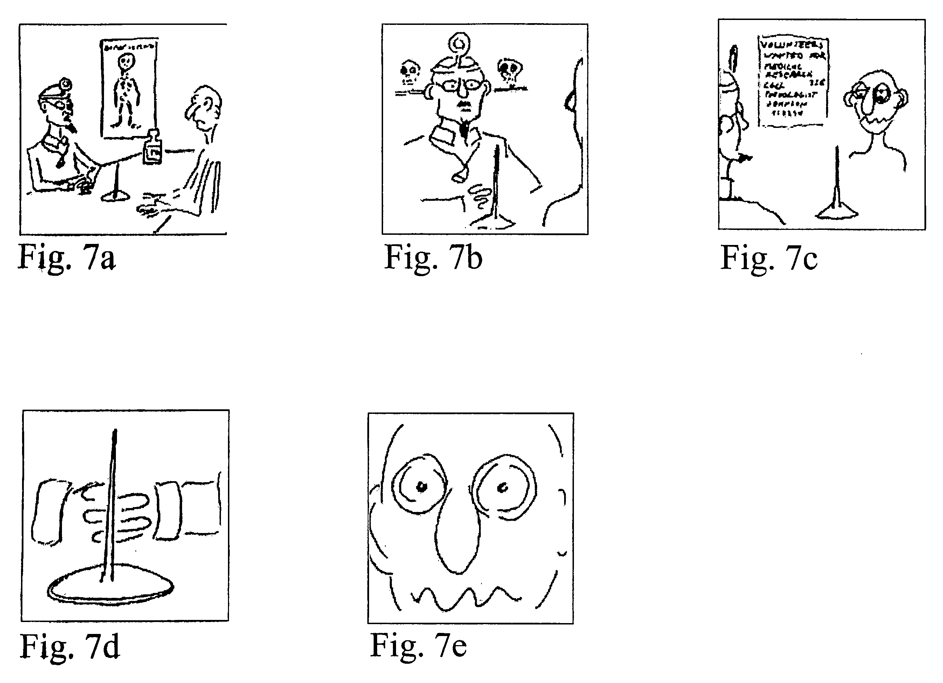

The letter spike, which is essential in respect of suspense in the movie (Fig. 6), is easily overlooked. For the scene to be functional both technically and in respect of pictorial narration in a handheld telephone having a small display and a narrow bandwidth, it has to be composed by editing from denser images without camera movement (Fig. 7a -7e), ensuring that both the letter spike and the actor's reaction will be visible. Images that function in both implementations may be used in common; for example, the episode may well continue in both cases with image 7e.

In respect of sound in a movie, the same problems are encountered as when considering the size of the display of the terminal. When the sound of a movie is adapted to different terminals, there appear problems regarding the dynamics of audio reproduction. Sounds that are distinguished in digital TV apparatus provided with surround sound remain partially inaudible in the loudspeaker of a mobile telephone. The stereo effect is also lost because only one speaker is available. The problems of audio dynamics have traditionally been approached by compressing the sound, in other words, by reducing the difference between the quietest and the loudest sounds. In practice, quiet sounds are amplified to a level closer to sounds of a higher volume. With this arrangement, even with modest devices it is possible to hear something like "the entire sound package". This solution impairs sound dramatics because a whisper and a scream are reproduced at almost the same volume.

In designing a sound version for a movie to be viewed on different terminals, it is necessary to go beyond conventional compression.

Just as the image format of versions implemented for different terminals is dependent on the receiver (handheld telephone, computer, digital TV), the sound has to be more adaptable than what is achieved by merely narrowing the dynamics window. The solution is to prepare several audio versions for the same movie, depending on the terminal versions. In practice, it is advisable to start the audio design from a version that allows the richest audio world to be used, in other words, from a digital TV version. After this, the sound is developed to produce "lighter" styles to suit each format. In a portable telephone version with a more stripped-down pictorial narration, punchier and simpler sound is required than in a broader digital TV version to ensure that the device can reproduce it well.

For example, a scene where the protagonist is seen starting a drive on a car in a city. In a digital TV version, it is possible to include in the sound both the car's own noise, background sounds from the city, steps of people walking past, etc., but in a portable telephone version a more impressive result may be achieved by merely producing the sound of brisk acceleration of the car.

Thus, in the case of sound too, what is needed is some kind of compression of the idea and direction of attention to essential things. In the simplest case, we may speak of cartoon-like sound.

Moreover, when a portable telephone is used, the viewing situation may be susceptible to disturbances, so that finely tuned audio information will be lost in the noise of the world.

In the service of the invention, it is also possible to show old movies or scenes from them. From these, too, versions of a lighter degree of heaviness that are better suited for small displays can be produced as far as possible. Different scenes can be afterwards processed digitally, e.g. by zooming the image to a denser form or softening the background or compressing the sound.

The principle of the service is that all versions resemble each other as closely as possible. The resemblance may even be such that a spectator having seen two different versions will not necessarily even realize that the implementations were different. Naturally, a cartoon-strip style version made for terminals with lighter properties and a smaller display is implemented in a different style and differs considerably from cinematic expression. But even a cartoon-strip version is made in absolute accordance with the manuscript and corresponds to the cinematic versions in style and plot.

An essential point is that, in a service implemented according to the invention, the user sending a message consisting of text and imagery knows that the content of the message will remain the same independently of the receiver's terminal and the receiver will always receive a version that his terminal is able to reproduce as a good-quality presentation without jerky movements, tangles of pixels or other disturbances.

### Description of the service of the invention

We have developed a new service for terminals utilizing digital technology, especially for mobile telephones. The starting point in developing the service was to study the culture of how a short movie (in this case especially a micro-movie, which are implemented for smaller displays) w ill best find its users on a network. We ended up with an implementation where a micro-movie, in addition to serving as an independent work of art, also functions as a personal message or comment from sender to receiver. Thus, when receiving a micro-movie message, the receiver will know that it also contains something personal.

In simplified terms, the principle of the service is as follows: In the service, short movies provided with a message are sent from a service provider's server to terminals. The service is composed of a repository of short movies and a menu of texts. The idea is to attach a text to a movie as a fixed part of it (cf. introductory texts / postscripts in cinema films) instead of sending the text as a separate message.

The service functions in such manner that, after selecting a desired movie from the repository of short movies, the sender of the message chooses from the text menu a suitable text, which is attached to the end of the movie as a final comment or to the beginning as a title of the movie, and the whole combination is sent to the receiver.

Short movies are independent works of art. The movies may be fictional (even mere episodes from motion picture classics), documents, animations or music videos. The humor in the movies is largely based on the feelings experienced by the characters.

The text alternatives in the text menu are sayings (e.g. Persian proverb: "The bigger the head, the bigger the headache."), quotations, aphorisms, congratulations, wishes, requests, orders, admonitions, apologies and questions. If the sender so wishes, he may modify the message or alternatively write it himself.

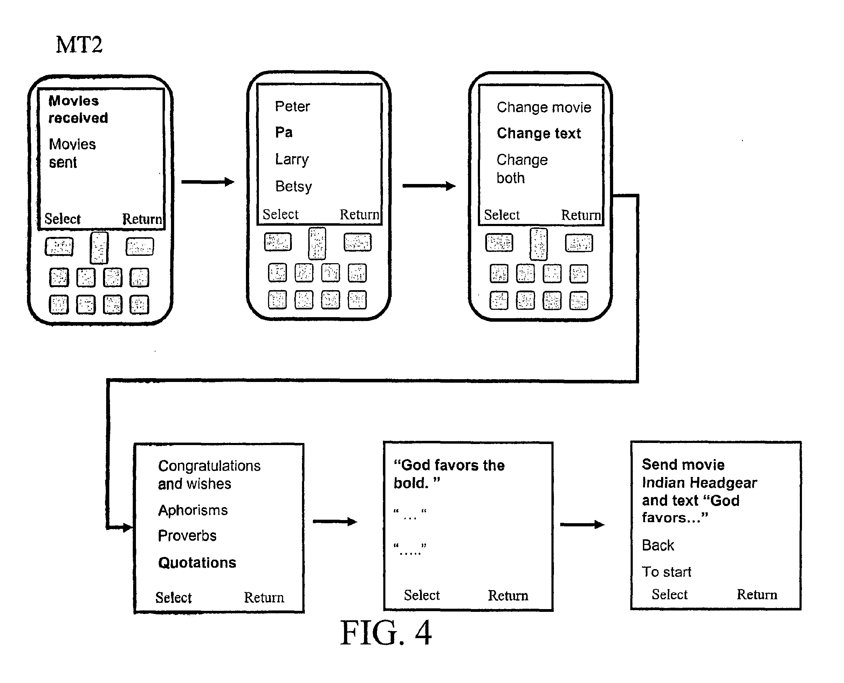

By appending a textual portion to the end of a short movie, the sender creates a personal content in the short movie. The text at the end defines a character appearing in the movie that the receiver or sender is identified with. In this manner spiced with humor, the sender can tell the receiver things that may be otherwise difficult to express. In the best case, the same movie can be used several times, depending on the final texts. The receiver may send back the same movie but selects a different message to be attached to the end, thus completely changing the point of view... or he changes the movie but attaches the same message... or he changes both... (for example, the movie is accompanied by a message containing a response link that can be clicked to change the movie or the text. See example in Fig. 4.)

The service provides e.g. three different versions, three different degrees of heaviness of the same movie, taking into account the potential terminals (home computer, digital TV, mobile telephone) and transmission capacity. The server identifies the receiving terminal and sends to it a version of the movie consistent with its properties and communication speed. Thus, the movie can be sent e.g. as a streamed transmission or as a series of still pictures, depending on the properties supported by the receiving terminal.

The details of the features of the method and system of the invention are disclosed in the claims presented below.

The target group of the service may consist especially of young people accustomed to mobile services. However, the range of users can easily be extended as the use of telephones capable of transmitting moving images is gaining ground. With the development of user friendly processes, the service may reach new and new user groups, so it is possible to offer these user groups movies especially intended for them. By using the invention, teleoperators can create a new form of service, and some of the income from the service may be directed e.g. to charity organizations, which contributes towards creating additional content in the service and expanding the range of users.

In the following, the invention will be described in detail by the aid of an example with reference to the attached drawings, wherein
Fig. 1 presents a system according to the invention in simplified form.

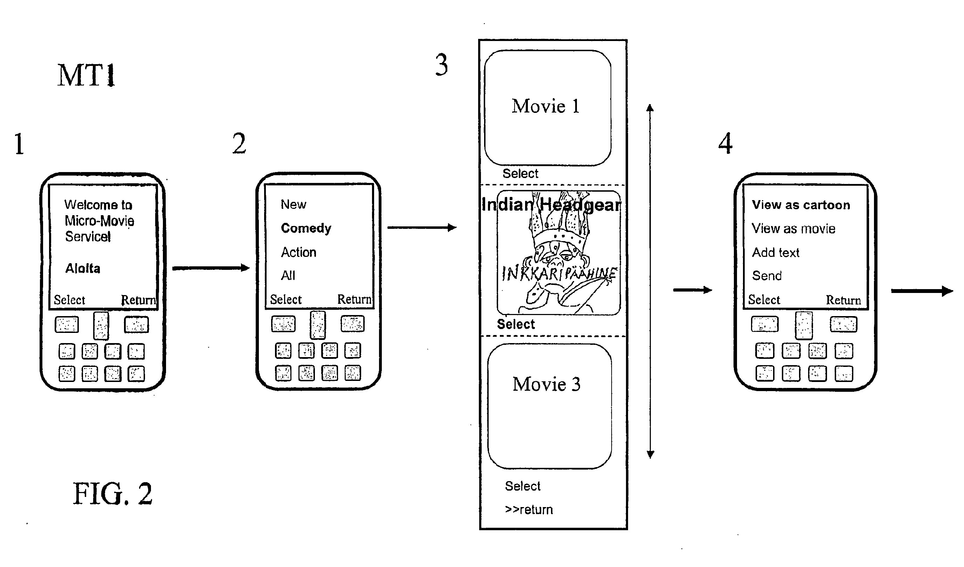

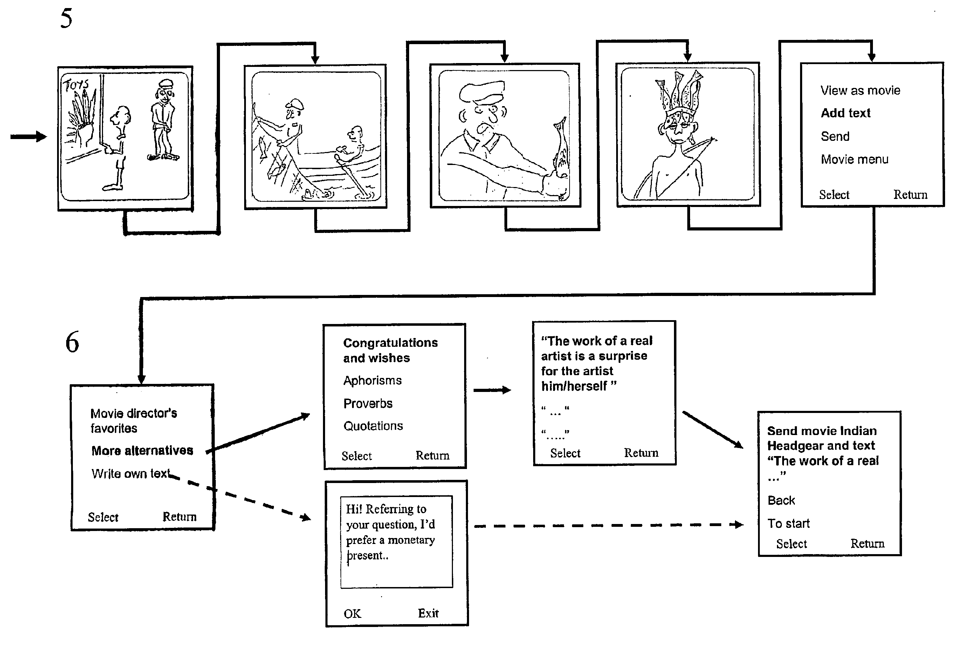

Fig. 2 illustrates the selection of a movie,
Fig. 3 illustrates the operation of the service of the invention,
Fig. 4 illustrates retransmission,
Fig. 5a, 5b, 6 and 7a - 7e visualize the importance of display size for pictorial narration.

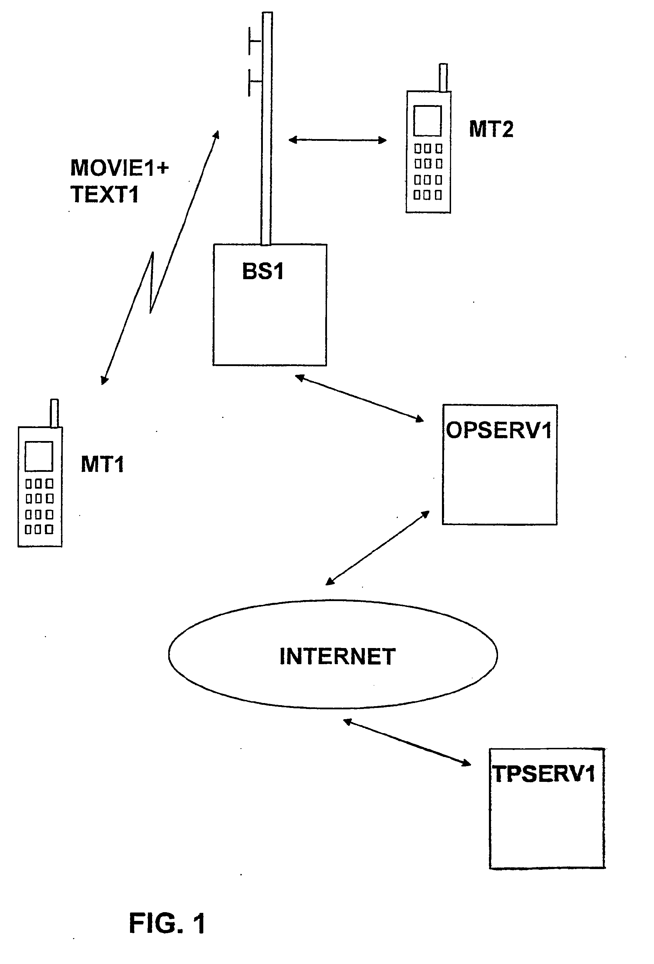

Fig. 1 represents a mobile telephone system, comprising mobile stations MT1 and MT2 and a base station BS1 for the transmission of calls and messages. In the service, short movies MOVIE1+TEXT1 provided with a text are sent from an operator's server OPSERV1 to the mobile stations. The service is composed of a repository of short movies and a text menu. The service works in such manner that, after selecting a desired movie MOVIE1 from the short movie repository, which may be located on an external server TPSERV1 and accessed over an Internet connection, the sender of the message selects from the text menu a text TEXT1 that he finds suitable and attaches it to the end of the movie and then sends the combination to the receiver.

The short movies MOVIE1 are independent works of art. The movies may be fictive, documentary or musical videos. The message of the movies is largely based on the feelings experienced by the characters.

The text alternatives in the text menu are proverbs, quotations, aphorisms, congratulations, wishes, requests, orders, admonitions, apologies and questions. If the sender so wishes, he may modify the message or alternatively write one himself. By appending a textual portion to the end of a short movie, the sender creates a personal content in the short movie. The text at the end defines a character appearing in the movie that the receiver or sender is identified with. In this manner spiced with humor, the sender can tell the receiver things that may be otherwise difficult to express.

### Example 1. HOW THE MOVIE AND THE TEXT TO BE APPENDED TO IT ARE SELECTED

1) The user establishes a connection to a micro-movie service, accessing the starting page of the service.

2) The user proceeds to select movies. The display of his terminal shows a menu where he can give closer definitions to indicate whether he wants to familiarize with all movies available or whether he wants to limit the number of movies.

The movies on the server may have been classified in various ways and the same movie may belong to several categories. The movies may have been classified e.g. by genre (e.g. comedy, scifi, horror, drama, animation, music videos...) or by production company, director, scriptwriter or by actor or other person appearing in the movie, e.g. writer or philosopher.

In the main menu, one can also find different series in the style of Tarzan, Batman or F lintstones b y t heir own n ames. I n addition to these, the menu must contain novelties and maybe a submenu for the most popular movies.

In this example, four categories of movies are used.

3) Once the user has chosen the movies he wants to see, he is presented posters describing these movies. The posters are consistent with the spirit of the movie and tell as much as possible about its content. Besides the title of the movie, the poster may additionally bear a text descriptive of the content if necessary. The poster may also contain moving elements.

The user selects a desired movie from among the alternatives provided.

4) At this point, the user can choose the movie for transmission and proceed to the text menu to find a text suited to the movie or
5) proceed to see a cartoon-strip style collage of the movie.

The collage has been produced by selecting scenes essential to the plot of the movie e.g. as still pictures, revealing the content, style and plot of the movie. If necessary, the collage may contain moving elements demonstrating the spirit of the movie. The cartoon-strip style collages allow the user to quickly browse the movies to see which one is suited to his purposes.

If he so wishes, the user can proceed to see the entire movie, which will be sent to him with the capacity required by his terminal.

From each stage, starting from the poster, the user can choose to view the movie, send the movie or enter the text menu. From each stage, the user may return backwards or go directly into the main menu.

Once the user has selected a movie, the server offers him the possibility of sending the movie as such, proceeding to select a text to be appended to the movie or writing a message himself

The text menu offers him e.g. five texts appropriate to the selected movie and, in addition to these, the alternative of writing a text himself, as well as a possibility to go on searching for more alternatives

If the user wishes to see more alternatives, he will enter a menu containing various titles according to the type of text alternatives. These may include e.g. aphorisms and proverbs, quotations, congratulations, wishes, requests, orders, admonitions, apologies and questions.

After having selected a heading, the user may read all texts provided under that heading or he may proceed to a still more precise searching stage. For example, after the headings "Proverbs and Aphorisms" has been selected, the options in the next menu could define the search more closely as different aspects of human life, such as: Optimism/pessimism, Happiness, Intelligence, Truth or, say, Friendship, Freedom, Child and Parents.

The selected movie determines the texts that will be primarily offered to the user to read. This allows the user to pick up a choice more easily and quickly as he does not have to pay attention to texts that are not applicable to the movie selected.

If the user wishes to read all the texts or use the service by first selecting a text and then finding a movie that suits it, then that is also possible.

When the user selects a text, the program tells him which combination he has selected and requests a receiver address. The address may be an Internet address (electronic mail address), a phone n umber (MSISDN n umber) or some other address.
The server is now sent information giving both the movie selected, the text to be appended to it and the receiver's address. The server establishes a connection with the receiver and learns what type of terminal the receiver has, whereupon it combines the text with an appropriate version of the movie and sends the combination to the receiver.

### Example 2. Description of the service

The fundamental principle of the service is that of producing from the short movies available several versions of different levels already at the shooting stage. In this way it is possible to take into account the properties of terminals of different types, such as display size and video properties of the terminal, and to adapt the movie expressly for the terminal type in question. This guarantees the functionability of the movie both technically and artistically in limited terminal equipment environments.

For example, a movie may be made in three versions: heavy, medium heavy and light. In this example, the heavy version of the movie corresponds to a DVD-level movie having a 16:9 aspect ratio and making versatile use of different forms of visual expression (track shots, diversified sound world (DD5.1, DTS) etc).

The medium heavy movie version is designed for mobile terminals supporting streamable movies. The movie uses lighter narration (the camera is not moving, scenes and backgrounds are static and as graphical as possible, the sound world is adapted to the properties of the terminal), so that the movie format itself supports low communication speeds, small displays and a low terminal performance.

The light movie version consists of successive still pictures (cartoon-strip style narration) and takes into account even those terminals that do not support video at all.

In the example presented here, three different movie versions are used, but the number of movie versions is not limited. Instead, their number can be increased if necessary.

### Example 3. Transmission of a movie to a receiver

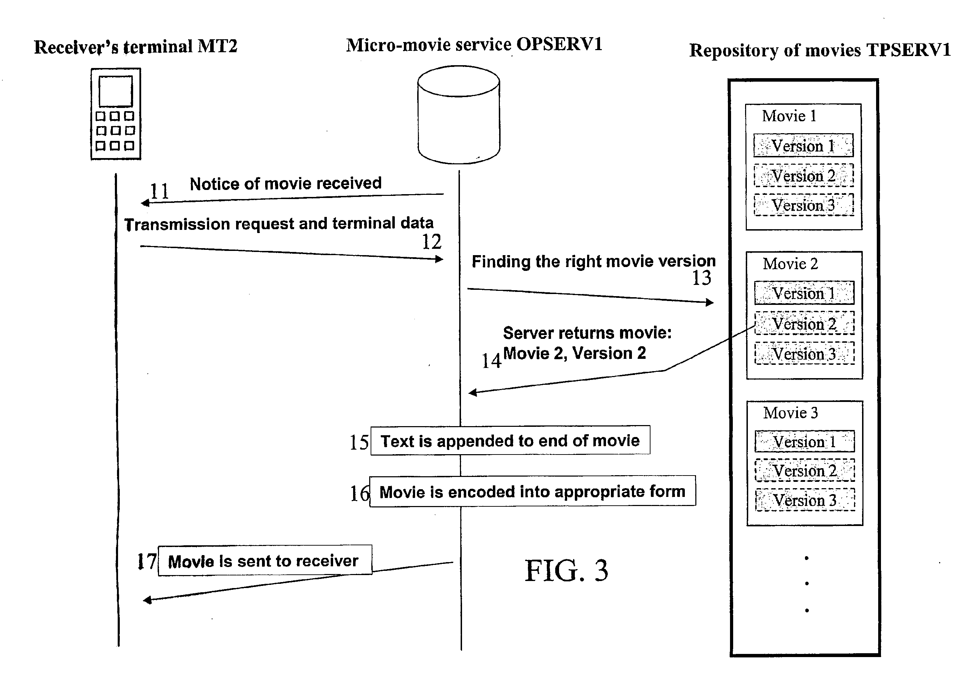

Below is a simple description of the transmission of a movie to a receiver (see Fig. 3).

The transmission process involves the following parties: "**Sende**r", who has chosen a desired movie and wants to send it to "**receiver**". The sender may attach a personal or pre-prepared text portion to the end of the movie. "**Termina**l" refers to the terminals MT1 and MT2 used by the sender and the receiver. "**Server**" OPSERV1 is the part of the movie service system that takes care of sending the movie to the receiver. "**Movie server**" TPSERV1 functions as a repository of movies.

A movie is transmitted to a receiver as follows: (see Fig. 3).
11. The receiver receives notice of a new movie having arrived. Based on this piece of information, the receiver will be able to see the movie using any terminal.
12. When the receiver wishes to see the movie, he sends a corresponding request to the server. The server identifies the receiver by the request sent to it.
13. The request is accompanied by information about the receiver's terminal *
14. The server chooses the right version of the movie (e.g. heavy, medium heavy or still version) according to the properties of the terminal. The movies may be located on a separate movie server
15. If the user has selected a text portion, the server adds it to the end of the movie (cf. postscripts in cinema films)
16. The server adapts the movie to the resolution of the display of the terminal
17. The finished movie is encoded in the server into a format supported by the terminal (e.g. realmedia, jpeg), whereupon the server sends the movie to the receiver's terminal by using a technique supported by it (e.g. streamed transmission, MMS message).
* The terminal sends the information about its properties in a separate message. The message may consist of e.g. variables that are assigned different values depending on the properties of the terminal. Table 1 presents an example of a possible implementation:

**Table 1**

| **Attribute** | **Description** | **Type** | **Sample Values** |
|---|---|---|---|
| | | | |
| DeviceType | Describes the type of the client | Literal bag | "Mobile phone", "Nokia xxxx ver 1.0" |
| MaxImageResolution | The maximum size of a movie in pixels (horizontal x vertical) | Literal | "176x208" |
| MediaTypes | List of supported media types | Literal bag | "image/jpeg", "video/mpeg-4", |
| AcceptLanguage | List of preferred languages. The first item in the list should be considered the user's first choice. | Literal bag | "fi", "en" |
| StreamingCapable | Indicates whether the client is capable of invoking streaming. | Boolean | YES, NO |

If necessary, the number of variables can be increased if new properties are introduced or if required by the nature of the service.

Having received notice of a new movie, the receiver may see the movie at once or later. Information regarding movies received by the receiver and texts appended to them remain stored in the memory of the service. Thus, the receiver can review the movie again and using different terminals, so he can see several versions of the same movie implemented in different ways:

The receiver may forward the message received or he can send it back to the receiver, provided with new pictorial or text information In this way, the sender and the receiver can communicate with each other via pictorial information and texts appended to it.

It is obvious to the person skilled in the art that the invention is not limited to the examples described a bove, but that it may be varied within the scope of the claims presented below.

## Claims

1. Method for transmitting messages containing pictorial information to terminals in a service based on pictorial messages whereby the sender and the receiver use terminals (MT1, MT2), whereby a sender sends a message to a receiver by selecting the pictorial information (MOVIE1-MOVIE3) to be included in the message from the memory of a movie server provided in the system, wherein the pictorial information is in a motion-picture type format, such as a short film, wherein the memory contains versions of the same pictorial information that are suited to terminals having different properties (page 7, lines 15 and 16), and that
the service takes the technical properties of the receiver's terminal into account and chooses a version of the pictorial information that is compatible with the properties of the receiver's terminal,
**characterized in that**
the different versions of the pictorial information are produced at shooting stage by editing the content of the pictorial information and modifying it according to the technical properties, in particular, the display size of the receiver's terminal and
the receiver's terminal sends information about its properties in a separate message consisting of variables that are assigned different values depending on the properties of the terminal and including at least the maximum pixel size and a list of supported media types.

2. Method according to claim 1, **characterized in that**
the sender selects the pictorial information by means of an image or combined image, such as a poster-like picture, still picture or cartoon version, representing the pictorial information in question on the display of the terminal.

3. Method according to claim 1, **characterized in that** in connection with the transmission of pictorial messages (MOVIE1) it is possible to send together with it at least one text (TEXT1) as desired by the sender, said text being either written by the sender himself/herself and/or selected from the memory.

4. Method according to claim 1, **characterized in that** the pictorial message is a movie, especially a short movie, cartoon, music video or equivalent.

5. Method according to claim 1, **characterized in that** the service functions in such manner that, after selecting a desired movie (MOVIE1) from a repository of short movies or from a corresponding storage, the sender of the message selects from a text menu a desired text (TEXT1) for the pictorial information, this text is appended to the pictorial information, and the sender sends the combination.

6. Method according to claim 1, **characterized in that** one of the pictorial information versions is a cartoon version made from a movie for slower communication, wherein the plot is told in the style of a cartoon strip.

7. Method according to claim 1, **characterized in that** at least one of the pictorial information versions has been adapted according to the properties of the receiver's terminal, e.g. according to the limited display and/or sound properties of the receiver's terminal.

8. Method according to claim 1, **characterized in that** the receiver can either forward a message received or send it back to the sender, provided with new text information and/or new pictorial information.

9. System for the transmission of messages containing pictorial information to terminals e.g. in a mobile communication system, in a service based on pictorial messages said system comprising terminals (MT1), base stations (BS1) and servers (OPSERV1) connected to them,
whereby the sender and the receiver use terminals (MT1, MT2),
whereby a sender sends a message to a receiver by selecting the pictorial information (MOVIE1-MOVIE3) to be included in the message from the memory of a movie server provided in the system,
wherein the pictorial information is in a motion-picture type format, such as a short film,
wherein
the memory unit contains stored versions (MOVIE1-MOVIE3) differing from each other of which the system selects a version that is compatible with the properties of the terminal,
**characterized in that**
the sender can select the pictorial- information by means of an image or combined image, such as a poster-like picture, still picture or cartoon, on the display of the terminal, and
the different versions of the pictorial information can be produced at shooting stage by editing the content of the pictorial information and modifying it according to the technical properties, in particular, the display size of the receiver's terminal and
the receiver's terminal is adapted to send information about its properties in a separate message consisting of variables that are assigned different values depending on the properties of the terminal and including at least the maximum pixel size and a list of supported media types.

10. System according to claim 9, **characterized in that** the system comprises a text function whereby it is possible in connection with the transmission of a pictorial message (MOVIE1) to send together with it at least one text (TEXT1) as desired by the sender, said text being either written by the sender himself/herself and/or selected from the memory.

11. System according to claim 9, **characterized in that** one of the pictorial information versions in the image memory unit is a cartoon version made from a movie for slower communication, wherein the plot is told in the style of a cartoon strip.

12. System according to claim 9, **characterized in that** at least one of the pictorial information versions has been adapted according to the properties of the receiver's terminal, e.g. according to the limited display and/or sound properties of the receiver's terminal.

## Patentansprüche

1. Verfahren zur Übertragung von Bildinformationen enthaltenden Nachrichten an Endgeräte in einem auf Bildnachrichten basierenden Dienst, wobei der Sender und der Empfänger Endgeräte (MT1, MT2) verwenden, wobei ein Sender eine Nachricht an einen Empfänger sendet, indem er die in die Nachricht einzuschließenden Bildinformationen (MOVIE1-MOVIE3) aus dem Speicher eines in dem System vorgesehenem Filmservers auswählt, wobei die Bildinformationen in einem Filmtyp-Format sind, wie zum Beispiel ein Kurzfilm, wobei der Speicher Versionen der gleichen Bildinformationen enthält, die für Endgeräte mit unterschiedlichen Eigenschaften (Seite 7, Zeilen 15 und 16) geeignet sind, und wobei der Dienst die technischen Eigenschaften des Endgeräts des Empfängers berücksichtigt und eine Version der Bildinformationen auswählt, die mit den Eigenschaften des Endgeräts des Empfängers kompatibel ist,
**dadurch gekennzeichnet, dass**
die unterschiedlichen Versionen der Bildinformationen im Stadium der Dreharbeiten produziert werden, indem der Inhalt der Bildinformationen editiert wird und gemäß den technischen Eigenschaften, insbesondere der Displaygröße des Endgeräts des Empfängers modifiziert wird, und
das Endgerät des Empfängers Informationen über seine Eigenschaften in einer separaten Nachricht sendet, die aus Variablen besteht, die verschiedenen, von den Eigenschaften des Endgeräts abhängigen Werten zugeordnet sind und zumindest die maximale Pixel-Größe und eine Liste der unterstützten Medientypen beinhalten.

2. Verfahren nach Anspruch 1, **dadurch gekennzeichnet, dass** der Sender die Bildinformationen mittels eines Bildes oder eines kombinierten Bildes, wie zum Beispiel eines plakatartigen Bildes, Standbildes oder einer gezeichneten Version auswählt, welches die fraglichen Bildinformationen auf dem Display des Endgeräts darstellt.

3. Verfahren nach Anspruch 1, **dadurch gekennzeichnet, dass** es in Verbindung mit der Übertragung von Bildnachrichten (MOVIE1) möglich ist, mit dieser zusammen mindestens einen Text (TEXT1) nach Wunsch des Senders zu senden, welcher Text entweder von dem Sender selbst geschrieben wird und/oder aus dem Speicher ausgewählt wird.

4. Verfahren nach Anspruch 1, **dadurch gekennzeichnet, dass** die Bildnachricht ein Film ist, insbesondere ein Kurzfilm, ein Zeichentrickfilm, ein Musikvideo oder dergleichen.

5. Verfahren nach Anspruch 1, **dadurch gekennzeichnet, dass** der Dienst so funktioniert, dass nach dem Auswählen eines gewünschten Films (MOVIE1) aus einem Vorrat von Kurzfilmen oder aus einem entsprechenden Speicher der Sender der Nachricht aus einem Textmenü einen gewünschten Text (TEXT1) für die Bildinformationen auswählt, dieser Text an die Bildinformationen angehängt wird und der Sender die Kombination sendet.

6. Verfahren nach Anspruch 1, **dadurch gekennzeichnet, dass** eine der Bildinformationsversionen eine gezeichnete Version ist, die für langsamere Kommunikation aus einem Film hergestellt wurde, wobei die Handlung im Stil einer Bildgeschichte erzählt wird.

7. Verfahren nach Anspruch 1, **dadurch gekennzeichnet, dass** mindestens eine der Bildinformationsversionen gemäß den Eigenschaften des Endgeräts des Empfängers angepasst wurde, beispielsweise gemäß den eingeschränkten Display- und/oder Toneigenschaften des Endgeräts des Empfängers.

8. Verfahren nach Anspruch 1, **dadurch gekennzeichnet, dass** der Empfänger eine empfangene Nachricht entweder weiterleiten oder zurück an den Sender senden kann, versehen mit neuen Textinformationen und/oder neuen Bildinformationen.

9. System zur Übertragung von Bildinformationen enthaltenden Nachrichten an Endgeräte, beispielsweise in einem Mobilkommunikationssystem, in einem auf Bildnachrichten basierenden Dienst, welches System Endgeräte (MT1), Basisstationen (BS1) und mit diesen verbundene Server (OPSERV1) umfasst, wobei der Sender und der Empfänger Endgeräte (MT1, MT2) benutzen,
wobei ein Sender eine Nachricht an einen Empfänger sendet, indem er die in die Nachricht einzuschließenden Bildinformationen (MOVIE1-MOVIE3) aus dem Speicher eines in dem System vorgesehenen Filmservers auswählt,
wobei die Bildinformationen in einem Filmtyp-Format sind, wie etwa ein Kurzfilm, wobei die Speichereinheit gespeicherte Versionen (MOVIE1-MOVIE3) enthält, die sich voneinander unterscheiden, aus welchen das System eine Version auswählt, die mit den Eigenschaften des Endgeräts kompatibel ist,
**dadurch gekennzeichnet, dass**
der Sender die Bildinformationen mittels eines Bildes oder kombinierten Bildes, wie etwa eines plakatartigen Bildes, eines Standbildes oder einer Zeichnung auf dem Display des Endgeräts auswählen kann, und
die verschiedenen Versionen der Bildinformationen im Stadium der Dreharbeiten durch Editieren des Inhalts der Bildinformationen und Modifizieren desselben gemäß den technischen Eigenschaften, insbesondere der Display-Größe des Endgeräts des Empfängers, produziert werden können, und
das Endgerät des Empfängers dafür ausgelegt ist, Informationen über seine Eigenschaften in einer separaten Nachricht zu senden, die aus Variablen besteht, die verschiedenen, von den Eigenschaften des Endgeräts abhängigen Werten zugeordnet sind und mindestens die maximale Pixel-Größe und eine Liste der unterstützten Medientypen enthalten.

10. System nach Anspruch 9, **dadurch gekennzeichnet, dass** das System eine Textfunktion umfasst, durch welche es möglich ist, in Verbindung mit der Übertragung einer Bildnachricht (MOVIE1) zusammen mit dieser mindestens einen Text (TEXT1) nach Wunsch des Senders zu senden, welcher Text entweder von dem Sender selbst geschrieben wird und/oder aus dem Speicher ausgewählt wird.

11. System nach Anspruch 9, **dadurch gekennzeichnet, dass** eine der Bildinformationsversionen in der Bildspeichereinheit eine gezeichnete Version ist, die für langsamere Kommunikation aus einem Film hergestellt wurde, wobei die Handlung im Stil einer Bildgeschichte erzählt wird.

12. System nach Anspruch 9, **dadurch gekennzeichnet, dass** mindestens eine der Bildinformationsversionen den Eigenschaften des Endgeräts des Empfängers entsprechend angepasst wurde, zum Beispiel gemäß den eingeschränkten Display- und/oder Toneigenschaften des Endgeräts des Empfängers.

## Revendications

1. Procédé pour transmettre des messages contenant des informations picturales à des terminaux dans un service basé sur des messages picturaux par lequel l'émetteur et le récepteur utilisent des terminaux (MT1, MT2), par lequel un émetteur envoie un message à un récepteur en sélectionnant les informations picturales (MOVIE1 à MOVIE3) à inclure dans le message dans la mémoire d'un serveur de films prévu dans le système, dans lequel les informations picturales sont dans un format de type image animée, tel qu'un court métrage, dans lequel la mémoire contient des versions des mêmes informations picturales qui sont appropriées à des terminaux ayant différentes propriétés (page 7, lignes 15 et 16), et en ce que
le service prend en compte les propriétés techniques du terminal du récepteur et choisit une version des informations picturales qui est compatible avec les propriétés du terminal du récepteur,
**caractérisé en ce que**
les différentes versions des informations picturales sont produites à l'étape de prise de vue en éditant le contenu des informations picturales et en le modifiant en fonction des propriétés techniques, en particulier, du format d'affichage du terminal du récepteur et
le terminal du récepteur envoie des informations concernant ses propriétés dans un message séparé consistant en des variables auxquelles différentes valeurs sont attribuées en fonction des propriétés du terminal et comprenant au moins la taille en pixels maximum et une liste de types de supports pris en charge.

2. Procédé selon la revendication 1, **caractérisé en ce que** l'émetteur sélectionne les informations picturales au moyen d'une image ou d'une image combinée, telle qu'une image de type affiche, une image fixe ou une version de film d'animation, représentant les informations picturales en question sur l'afficheur du terminal.

3. Procédé selon la revendication 1, **caractérisé en ce que**, en relation avec la transmission de messages picturaux (MOVIE1), il est possible d'envoyer avec ceux-ci au moins un texte (TEXT1) tel que souhaité par l'émetteur, ledit texte étant écrit par l'émetteur lui-même et/ou sélectionné dans la mémoire.

4. Procédé selon la revendication 1, **caractérisé en ce que** le message pictural est un film, particulièrement un court métrage, un film d'animation, une vidéo de musique ou équivalent.

5. Procédé selon la revendication 1, **caractérisé en ce que** le service fonctionne d'une manière telle que, après la sélection d'un film (MOVIE1) souhaité dans un référentiel de courts métrages ou dans une mémoire correspondante, l'émetteur du message sélectionne, dans un menu de textes, un texte (TEXT1) souhaité pour les informations picturales, ce texte est joint aux informations picturales, et l'émetteur envoie la combinaison.

6. Procédé selon la revendication 1, **caractérisé en ce qu'**une des versions d'informations picturales est une version de film d'animation réalisée à partir d'un film pour une communication plus lente, dans lequel l'intrigue est racontée dans le style d'une bande de film d'animation.

7. Procédé selon la revendication 1, **caractérisé en ce qu'**au moins l'une des versions d'informations picturales a été adaptée en fonction des propriétés du terminal du récepteur, par exemple en fonction des propriétés d'affichage et/ou sonores limitées du terminal du récepteur.

8. Procédé selon la revendication 1, **caractérisé en ce que** le récepteur peut soit réacheminer un message reçu, soit le renvoyer à l'émetteur, pourvu de nouvelles informations textuelles et/ou de nouvelles informations picturales

9. Système pour la transmission de messages contenant des informations picturales à des terminaux, par exemple dans un système de communication mobile, dans un service basé sur des messages picturaux, ledit système comprenant des terminaux (MT1), des stations de base (BS1) et des serveurs (OPSERV1) connectés à ceux-ci,
par lequel l'émetteur et le récepteur utilisent des terminaux (MT1, MT2),
par lequel un émetteur envoie un message à un récepteur en sélectionnant les informations picturales (MOVIE 1 à MOVIE3) à inclure dans le message dans la mémoire d'un serveur de films prévu dans le système,
dans lequel les informations picturales sont dans un format de type image animée, tel qu'un court métrage,
dans lequel
l'unité de mémorisation contient des versions mémorisées (MOVIE1 à MOVIE3) qui diffèrent les unes des autres parmi lesquelles le système sélectionne une version qui est compatible avec les propriétés du terminal,
**caractérisé en ce que**
l'émetteur peut sélectionner les informations picturales au moyen d'une image ou d'une image combinée, telle qu'une image de type affiche, une image fixe ou un film d'animation, sur l'afficheur du terminal, et
les différentes versions des informations picturales peuvent être produites à une étape de prise de vue en éditant le contenu des informations picturales et en le modifiant en fonction des propriétés techniques, en particulier, du format d'affichage du terminal du récepteur, et
le terminal du récepteur est adapté pour envoyer des informations concernant ses propriétés dans un message séparé consistant en des variables auxquelles différentes valeurs sont attribuées en fonction des propriétés du terminal et comprenant au moins la taille en pixels maximum et une liste de types de supports pris en charge.

10. Système selon la revendication 9, **caractérisé en ce que** le système comprend une fonction de texte par laquelle il est possible, en relation avec la transmission d'un message pictural (MOVIE1), d'envoyer avec celui-ci au moins un texte (TEXT1) tel que souhaité par l'émetteur, ledit texte étant écrit par l'émetteur lui-même et/ou sélectionné dans la mémoire.

11. Système selon la revendication 9, **caractérisé en ce que** l'une des versions d'informations picturales dans l'unité de mémorisation d'image est une version de film d'animation réalisée à partir d'un film pour une communication plus lente, dans lequel l'intrigue est racontée dans le style d'une bande de film d'animation.

12. Système selon la revendication 9, **caractérisé en ce qu'**au moins l'une des versions d'informations picturales a été adaptée en fonction des propriétés du terminal du récepteur, par exemple en fonction des propriétés d'affichage et/ou sonores limitées du terminal du récepteur.
